# EUROPEAN PATENT APPLICATION

(11) **EP 3 117 990 A1**
(43) Date of publication of application: **18.01.2017**
(21) Application number: 15760725.0
(22) Date of filing: 11.03.2015
(51) Int. Cl.: B32B 15/082, C08F 8/42, C08F 297/04

(54) **COMPOSITE MULTI-LAYER SHEET**

(30) Priority: 13.03.2014 JP 2014050417
(71) Applicant: Zeon Corporation, Tokyo 100-8246 (JP)
(72) Inventor: CHIBA Daido, Tokyo 100-8246 (JP); ISHIGURO Atsushi, Tokyo 100-8246 (JP); KOHARA Teiji, Tokyo 100-8246 (JP)
(74) Representative: Vossius & Partner Patentanwälte Rechtsanwälte mbB
(86) International application number: PCT/JP2015/057102
(87) International publication number: WO 2015/137376

(57) **Abstract**

The present invention is a composite multilayer sheet comprising a sheet and a metal foil that are stacked in layers, the sheet being formed of a specific modified hydrogenated block copolymer [E] being obtained by introducing an alkoxysilyl group. The present invention provides a composite multilayer sheet that exhibits excellent moisture-proofness, oxygen barrier capability, light-blocking capability, heat resistance, hydrolysis resistance, and the like.

## Description

### TECHNICAL FIELD

The present invention relates to a composite multilayer sheet that exhibits excellent moisture-proofness, oxygen barrier capability, light-blocking capability, heat resistance, hydrolysis resistance, and the like, and is suitable as a drug/food packing material, a solar cell module back-side protective sheet, an organic EL device sealing material, an electronic part packing material, and the like.

### BACKGROUND ART

It is known that a hydrogenated block copolymer obtained by hydrogenating all of the unsaturated bonds of a block copolymer that includes a polymer block derived from an aromatic vinyl compound and a polymer block derived from a linear conjugated diene compound, exhibits excellent heat resistance, low hygroscopicity, excellent hydrolysis resistance, excellent transparency, and the like, exhibits excellent elution resistance (i.e., only a small amount of substance is eluted from the hydrogenated block copolymer), can be sterilized by steam sterilization, and therefore can be used as a drug/food packing material or container (see Patent Literature 1 to 3).

Such a hydrogenated block copolymer exhibits low hygroscopicity, but has a water vapor transmission rate and an oxygen transmission rate approximately equal to those of a polyolefin (e.g., polypropylene), and does not necessarily exhibit satisfactory moisture-proofness and oxygen barrier capability when used to produce a packing material or a container that utilizes a film, a sheet, or the like.

A metal foil (e.g., aluminum foil) may be stacked on a plastic film or sheet, or aluminum or a metal oxide may be deposited on a plastic film or sheet, in order to improve the moisture-proofness and the oxygen barrier capability of the plastic film or sheet while providing the plastic film or sheet with a light-blocking capability (so that a drug/food can be stored for a long time). It is possible to provide a plastic film or sheet with high moisture-proofness, oxygen barrier capability, and light-blocking capability by stacking a metal foil on the plastic film or sheet.

An adhesive is normally required when stacking a metal foil on a plastic film or sheet.

However, because a hydrogenated block copolymer exhibits significantly poor adhesion to a metal foil, an adhesive that exhibits excellent adhesion to a metal foil when stacking a metal foil on a film or a sheet formed of a hydrogenated block copolymer has not yet been found.

A modified hydrogenated block copolymer obtained by introducing an alkoxysilyl group into a hydrogenated block copolymer is known (see Patent Literature 4). Patent Literature 4 discloses that the modified hydrogenated block copolymer into which an alkoxysilyl group is introduced exhibits adhesion to glass, and can be used as a solar cell sealing material.

### CITATION LIST

### PATENT LITERATURE

Patent Literature 1: JP-A-2002-121244 (US2003/0207983A1)
Patent Literature 2: JP-A-2003-502470
Patent Literature 3: JP-A-2013-048560
Patent Literature 4: WO2012/043708 (US2013/0244367A1)

### SUMMARY OF INVENTION

### TECHNICAL PROBLEM

An object of the invention is to provide a composite multilayer sheet that exhibits excellent moisture-proofness, oxygen barrier capability, light-blocking capability, heat resistance, hydrolysis resistance, and the like, and is suitable as a drug/food packing material, a solar cell module back-side protective sheet, an organic EL device sealing material, an electronic part packing material, and the like.

### SOLUTION TO PROBLEM

The inventors conducted extensive studies in order to achieve the above object. As a result, the inventors found that a composite multilayer sheet that exhibits excellent moisture-proomess, oxygen barrier capability, light-blocking capability, heat resistance, hydrolysis resistance, and the like can be obtained by stacking a sheet and a metal foil in layers, the sheet being formed of a specific modified hydrogenated block copolymer [E] into which an alkoxysilyl group is introduced. This finding has led to the completion of the invention.

According to one aspect of the invention, a composite multilayer sheet includes a sheet and a metal foil that are stacked in layers, the sheet being formed of a modified hydrogenated block copolymer [E], the modified hydrogenated block copolymer [E] being obtained by introducing an alkoxysilyl group into a hydrogenated block copolymer [D], the hydrogenated block copolymer [D] being obtained by hydrogenating 90% or more of the unsaturated bonds of a block copolymer [C] that includes at least two polymer blocks [A] and at least one polymer block [B], the polymer block [A] including a repeating unit derived from an aromatic vinyl compound as the main component, the polymer block [B] including a repeating unit derived from a linear conjugated diene compound as the main component, and the ratio (wA:wB) of the total weight faction wA of the polymer block [A] in the block copolymer [C] to the total weight fraction wB of the polymer block [B] in the block copolymer [C] being 30:70 to 70:30.

It is preferable that the metal foil be an aluminum foil, and a plurality of the sheets formed of the modified hydrogenated block copolymer [E] and a plurality of the metal foils be stacked in layers.

The composite multilayer sheet according to one aspect of the invention may further include a sheet formed of either or both of a polyester and a polyamide. In this case, it is preferable that at least one of the outermost layers of the composite multilayer sheet be a sheet layer formed of either or both of the polyester and the polyamide, and a sheet layer formed of the modified hydrogenated block copolymer [E] be contiguous to the sheet layer formed of either or both of the polyester and the polyamide.

### ADVANTAGEOUS EFFECTS OF INVENTION

One aspect of the invention thus provides a composite multilayer sheet that exhibits excellent moisture-proofness, oxygen barrier capability, light-blocking capability, heat resistance, hydrolysis resistance, and the like, and is suitable as a drug/food packing material, a solar cell module back-side protective sheet, an organic EL device sealing material, an electronic part packing material, and the like.

### DESCRIPTION OF EMBODIMENTS

A composite multilayer sheet according to one embodiment of the invention includes a sheet and a metal foil that are stacked in layers, the sheet being formed of a modified hydrogenated block copolymer [E], the modified hydrogenated block copolymer [E] being obtained by introducing an alkoxysilyl group into a specific hydrogenated block copolymer [D], the hydrogenated block copolymer [D] being obtained by hydrogenating 90% or more of the unsaturated bonds (i.e., unsaturated bonds derived from an aromatic group and unsaturated bonds derived from a conjugated diene) of a block copolymer [C] that includes at least two polymer blocks [A] and at least one polymer block [B], the polymer block [A] including a repeating unit derived from an aromatic vinyl compound as the main component, and the polymer block [B] including a repeating unit derived from a linear conjugated diene compound as the main component.

### 1. Block copolymer [C]

The block copolymer [C] is a precursor for producing the specific hydrogenated block copolymer [D] used in connection with one embodiment of the invention. The block copolymer [C] includes at least two polymer blocks [A] and at least one polymer block [B].

The polymer block [A] includes a structural unit (repeating unit) derived from an aromatic vinyl compound as the main component. The content of the structural unit derived from an aromatic vinyl compound in the polymer block [A] is normally 80 wt% or more, preferably 90 wt% or more, and more preferably 95 wt% or more.

The polymer block [A] may include a component other than the structural unit derived from an aromatic vinyl compound. The polymer block [A] may include either or both of a structural unit derived from a linear conjugated diene compound and a structural unit derived from an additional vinyl compound as the component other than the structural unit derived from an aromatic vinyl compound. The content of the component other than the structural unit derived from an aromatic vinyl compound in the polymer block [A] is normally 20 wt% or less, preferably 10 wt% or less, and more preferably 5 wt% or less. When the content of the structural unit derived from an aromatic vinyl compound in the polymer block [A] is within the above range, the composite multilayer sheet according to one embodiment of the invention exhibits high heat resistance.

A plurality of polymer blocks [A] may be either identical or different as long as the above range is satisfied.

The polymer block [B] includes a structural unit (repeating unit) derived from a linear conjugated diene compound as the main component. The content of the structural unit derived from a linear conjugated diene compound in the polymer block [B] is normally 60 wt% or more, preferably 80 wt% or more, and more preferably 90 wt% or more.

The polymer block [B] may include a component other than the structural unit derived from a linear conjugated diene compound. The polymer block [B] may include either or both of a structural unit derived from an aromatic vinyl compound and a structural unit derived from an additional vinyl compound as the component other than the structural unit derived from a linear conjugated diene compound. The content of the component other than the structural unit derived from a linear conjugated diene compound in the polymer block [B] is normally 40 wt% or less, preferably 20 wt% or less, and more preferably 10 wt% or less. When the content of the structural unit derived from a linear conjugated diene compound in the polymer block [B] is within the above range, the composite multilayer sheet according to one embodiment of the invention exhibits excellent flexibility. If the content of the structural unit derived from an aromatic vinyl compound in the polymer block [B] is high, the composite multilayer sheet may exhibit low flexibility at a low temperature.

When the block copolymer [C] includes a plurality of polymer blocks [B], the plurality of polymer blocks [B] may be either identical or different as long as the above range is satisfied.

Specific examples of the aromatic vinyl compound include styrene; a styrene derivative that is substituted with an alkyl group, such as α-methylstyrene, 2-methylstyrene, 3-methylstyrene, 4-methylstyrene, 2,4-diisopropylstyrene, 2,4-dimethylstyrene, 4-t-butylstyrene, and 5-t-butyl-2-methylstyrene; a styrene derivative that is substituted with a halogen atom, such as 4-monochlorostyrene, dichlorostyrene, and 4-monofluorostyrene; a styrene derivative that is substituted with an aryl group, such as 4-phenylstyrene; and the like. Among these, an aromatic vinyl compound that does not include a polar group (e.g., styrene and a styrene derivative that is substituted with an alkyl group) is preferable from the viewpoint of hygroscopicity, and styrene is particularly preferable from the viewpoint of industrial availability.

Specific examples of the linear conjugated diene compound include 1,3-butadiene, isoprene, 2,3-dimethyl-1,3-butadiene, 1,3-pentadiene, and the like. Among these, a linear conjugated diene compound that does not include a polar group is preferable from the viewpoint of hygroscopicity, and 1,3-butadiene and isoprene are particularly preferable from the viewpoint of industrial availability.

Examples of the additional vinyl compound include a linear vinyl compound and a cyclic vinyl compound; an unsaturated cyclic acid anhydride; an unsaturated imide compound; and the like. These compounds may be substituted with a nitrile group, an alkoxycarbonyl group, a hydroxycarbonyl group, or a halogen atom. A compound that does not include a polar group is preferable from the viewpoint of hygroscopicity, a linear olefin (e.g., ethylene, propylene, 1-butene, I,-pentetic, 1-hexone, 1-heptene, 1-octene, 1-nonene, 1-decene, 1-dodecene, 1-eicosene, 4-methyl-1-pentene, and 4,6-dimethyl-1-heptene) and a cyclic olefin (e.g., vinylcyclohexane) are more preferable, a linear olefin is still more preferable, and ethylene and propylene are particularly preferable.

The number of polymer blocks [A] included in the block copolymer [C] is normally 5 or less, preferably 4 or less, and more preferably 3 or less. The number of polymer blocks [B] included in the block copolymer [C] is normally 4 or less, preferably 3 or less, and more preferably 2 or less. When the block copolymer [C] includes either or both of a plurality of polymer blocks [A] and a plurality of polymer blocks [B], the ratio (Mw(A1)/Mw(A2)) of the weight average molecular weight Mw(A1) of the polymer block among the plurality of polymer blocks [A] that has the highest weight average molecular weight to the weight average molecular weight Mw(A2) of the polymer block among the plurality of polymer blocks [A] that has the lowest weight average molecular weight, and the ratio (Mw(B1)/Mw(B2)) of the weight average molecular weight Mw(B1) of the polymer block among the plurality of polymer blocks [B] that has the highest weight average molecular weight to the weight average molecular weight Mw(B2) of the polymer block among the plurality of polymer blocks [B] that has the lowest weight average molecular weight, are 2.0 or less, preferably 1.5 or less, and more preferably 1.2 or less.

The block copolymer [C] may be a linear block copolymer or a radial block copolymer. It is preferable that the block copolymer [C] be a linear block copolymer since excellent mechanical strength can be obtained. It is most preferable that the block copolymer [C] be a triblock copolymer ([A]-[B]-[A]) in which the polymer block [A] is bonded to each end of the polymer block [B], or a pentablock copolymer ([A]-[B]-[A]-[B]-[A]) in which the polymer block [B] is bonded to each end of the polymer block [A], and the polymer block [A] is bonded to the other end of each polymer block [B].

The ratio (wA:wB) of the total weight fraction wA of the polymer block [A] in the block copolymer [C] to the total weight fraction wB of the polymer block [B] in the block copolymer [C] is 30:70 to 70:30, preferably 35:65 to 65:35, and more preferably 40:60 to 60:40. If the total weight fraction wA is too high, the resulting composite multilayer sheet may exhibit low flexibility, and cracks may easily occur in the outer resin layer (in the bent part) when the composite multilayer sheet is bent. If the total weight fraction wA is too low, the resulting composite multilayer sheet may exhibit insufficient heat resistance.

The polystyrene-equivalent weight average molecular weight (Mw) of the block copolymer [C] determined by gel permeation chromatography (GPC) (eluent: tetrahydrofuran (THF)) is normally 40,000 to 200,000, preferably 50,000 to 150,000, and more preferably 60,000 to 100,000. The molecular weight distribution (Mw/Mn) of the block copolymer [C] is preferably 3 or less, more preferably 2 or less, and particularly preferably 1.5 or less.

The block copolymer [C] may be produced using a method that alternately polymerizes a monomer mixture (a) that includes the aromatic vinyl compound as the main component, and a monomer mixture (b) that includes the linear conjugated diene compound as the main component, through living anionic polymerization or the like; or a method that sequentially polymerizes a monomer mixture (a) that includes the aromatic vinyl compound as the main component, and a monomer mixture (b) that includes the linear conjugated diene compound as the main component, and couples the terminals of the resulting polymer block [B] using a coupling agent, for example.

The content of the aromatic vinyl compound in the monomer mixture (a) is normally 80 wt% or more, preferably 90 wt% or more, and more preferably 95 wt% or more. The monomer mixture (a) may include either or both of a linear conjugated diene compound and an additional vinyl compound as a component other than the aromatic vinyl compound. The content of the component other than the aromatic vinyl compound in the monomer mixture (a) is normally 20 wt% or less, preferably 10 wt% or less, and more preferably 5 wt% or less.

The content of the linear conjugated diene compound in the monomer mixture (b) is normally 60 wt% or more, preferably 80 wt% or more, and more preferably 90 wt% or more. The monomer mixture (b) may include either or both of a structural unit derived from an aromatic vinyl compound and a structural unit derived from an additional vinyl compound as a component other than the linear conjugated diene compound. The content of the component other than the linear conjugated diene compound in the monomer mixture (b) is normally 40 wt% or less, preferably 20 wt% or less, and more preferably 10 wt% or less.

### 2. Hydrogenated block copolymer [D]

The hydrogenated block copolymer [D] used in connection with one embodiment of the invention is a polymer that is obtained by hydrogenating the carbon-carbon unsaturated bonds included in the main chain, the side chain, and the aromatic ring of the block copolymer [C]. The hydrogenation rate of the hydrogenated block copolymer [D] is normally 90% or more, preferably 97% or more, and more preferably 99% or more. The resulting transparent pressure-sensitive adhesive sheet exhibits better light resistance and heat resistance as the hydrogenation rate increases.

The hydrogenation rate of the hydrogenated block copolymer [D] may be determined by ¹H-NMR analysis.

The method for hydrogenating the unsaturated bonds, the reaction configuration, and the like are not particularly limited. It is preferable to use a hydrogenation method that can increase the hydrogenation ratio, and causes a polymer chain cleavage reaction to only a small extent. Examples of such a hydrogenation method include the method disclosed in WO2011/096389, the method disclosed in WO2012/043708 and the like.

The hydrogenated block copolymer [D] obtained as described above is collected from the reaction solution including the hydrogenated block copolymer [D] after removing either or both of a hydrogenation catalyst and a polymerization catalyst from the reaction solution. The hydrogenated block copolymer [D] thus collected is normally pelletized, and subjected to the subsequent alkoxysilyl group introduction step.

The polystyrene-equivalent weight average molecular weight (Mw) of the hydrogenated block copolymer [D] determined by GPC (eluent: THF) is normally 40,000 to 200,000, preferably 50,000 to 150,000, and more preferably 60,000 to 100,000. The molecular weight distribution (Mw/Mn) of the hydrogenated block copolymer [D] is preferably 3 or less, more preferably 2 or less, and particularly preferably 1.5 or less. When the weight average molecular weight (Mw) and the molecular weight distribution (Mw/Mn) of the hydrogenated block copolymer [D] are within the above ranges, the heat resistance and the mechanical strength of the resulting composite multilayer sheet are maintained.

### 3. Modified hydrogenated block copolymer [E]

The modified hydrogenated block copolymer [E] used in connection with one embodiment of the invention is obtained by reacting the hydrogenated block copolymer [D] with an ethylenically unsaturated silane compound in the presence of an organic peroxide to introduce an alkoxysilyl group into the hydrogenated block copolymer [D]. The alkoxysilyl group may be bonded directly to the hydrogenated block copolymer [D], or may be bonded to the hydrogenated block copolymer [D] through a divalent organic group (e.g., alkylene group or alkyleneoxycarbonylalkylene group).

The alkoxysilyl group is normally introduced in a ratio of 0.1 to 10 parts by weight, preferably 0.2 to 5 parts by weight, and more preferably 0.3 to 3 parts by weight, based on 100 parts by weight of the hydrogenated block copolymer [D]. If the alkoxysilyl group is introduced in too high a ratio, the alkoxysilyl groups decomposed due to a small amount of water or the like may be crosslinked to a large extent (before melt-forming the resulting modified hydrogenated block copolymer [E] to have the desired shape), whereby gelation may occur, or a decrease in formability may occur due to a decrease in melt-flowability, for example. If the alkoxysilyl group is introduced in too low a ratio, the resulting composite multilayer sheet may exhibit insufficient adhesion to a metal foil. Whether or not the alkoxysilyl group has been introduced can be determined from the IR spectrum, and the amount of alkoxysilyl group introduced can be calculated from the ¹H-NMR spectrum. Note that the number of integrations is increases when the amount of alkoxysilyl group introduced is small.

The ethylenically unsaturated silane compound is not particularly limited as long as the ethylenically unsaturated silane compound undergoes graft polymerization with the hydrogenated block copolymer [D] to introduce the alkoxysilyl group into the hydrogenated block copolymer [D]. Examples of a preferable ethylenically unsaturated silane compound include a vinyltrialkoxysilane such as vinyltrimethoxysilane and vinyltriethoxysilane; an allyltrialkoxysilane such as allyltrimethoxysilane and allyltriethoxysilane; a vinylalkyldialkoxysilane such as dimethoxymethylvinylsilane and diethoxymethylvinylsilane; a styryltrialkoxysilane such as p-styryltrimethoxysilane; a (meth)acryloxyalkyltrialkoxysilane such as 3-methacryloxypropylmethyldimethoxysilane, 3-methacryloxypropyltrimethoxysilane, and 3-acryloxypropyltrimethoxysilane; and the like.

These ethylenically unsaturated silane compounds may be used either alone or in combination.

The ethylenically unsaturated silane compound is normally used in a ratio of 0.1 to 10 parts by weight, preferably 0.2 to 5 parts by weight, and more preferably 0.3 to 3 parts by weight, based on 100 parts by weight of the hydrogenated block copolymer [D].

A peroxide having a one-minute half-life temperature of 170 to 190°C is preferably used as the peroxide. For example, t-butylcumyl peroxide, dicumyl peroxide, di-t-hexyl peroxide, 2,5-dimethyl-2,5-di(t-butylperoxy)hexane, di-t-butyl peroxide, di-(2-t-butylperoxyisopropyl)benzene, or the like is preferably used as the peroxide.

These peroxides may be used either alone or in combination.

The peroxide is normally used in a ratio of 0.05 to 2 parts by weight, preferably 0.1 to 1 part by weight, and more preferably 0.2 to 0.5 parts by weight, based on 100 parts by weight of the hydrogenated block copolymer [D].

The hydrogenated block copolymer [D] and the ethylenically unsaturated silane compound may be reacted in an arbitrary way in the presence of the peroxide. For example, a mixture that includes the hydrogenated block copolymer [D], the ethylenically unsaturated silane compound, and the peroxide may be kneaded at the desired temperature for the desired time using a twin-screw kneader to introduce the alkoxysilyl group into the hydrogenated block copolymer [D]. The kneading temperature is normally 180 to 220°C, preferably 185 to 210°C, and more preferably 190 to 200°C. The heating-kneading time (residence time) is normally 0.1 to 10 minutes, preferably 0.2 to 5 minutes, and more preferably 0.3 to 2 minutes. The mixture may be continuously kneaded and extruded so that the kneading temperature and the residence time fall within the above ranges.

The molecular weight of the modified hydrogenated block copolymer [E] is substantially identical to that of the hydrogenated block copolymer [D] used as the raw material since the amount of alkoxysilyl group introduced into the hydrogenated block copolymer [D] is small. However, since the hydrogenated block copolymer [D] is reacted with the ethylenically unsaturated silane compound in the presence of the organic peroxide, the polymer also undergoes a crosslinking reaction and a cleavage reaction, and the modified hydrogenated block copolymer [E] has a molecular weight distribution broader than that of the hydrogenated block copolymer [D]. The polystyrene-equivalent weight average molecular weight (Mw) of the modified hydrogenated block copolymer [E] determined by GPC (eluent: THF) is normally 40,000 to 200,000, preferably 50,000 to 150,000, and more preferably 60,000 to 100,000. The molecular weight distribution (Mw/Mn) of the modified hydrogenated block copolymer [E] is preferably 3.5 or less, more preferably 2.5 or less, and particularly preferably 2.0 or less. When the weight average molecular weight (Mw) and the molecular weight distribution (Mw/Mn) of the modified hydrogenated block copolymer [E] are within the above ranges, the heat resistance and the mechanical strength of the resulting composite multilayer sheet are maintained.

### 4. Additive

The modified hydrogenated block copolymer [E] may be used in the form of a resin composition that also includes various additives normally added to a resin.

Examples of the additives include a softener, a tackifier, an antioxidant, a UV absorber, a light stabilizer, an anti-blocking agent, and the like.

A low-molecular-weight hydrocarbon-based polymer may be added as the softener in order to improve the flexibility of the modified hydrogenated block copolymer [E]. It is preferable that the low-molecular-weight hydrocarbon-based polymer be able to be uniformly dissolved or dispersed in the modified hydrogenated block copolymer [E], and have a number average molecular weight of 300 to 5,000.

Specific examples of the hydrocarbon-based polymer include low-molecular-weight polyisobutylene, low-molecular-weight polybutene, low-molecular-weight poly-4-methylpentene, low-molecular-weight poly-1-octene, a low-molecular-weight ethylene-α-olefin copolymer, and hydrogenated products thereof: low-molecular-weight polyisoprene, a low-molecular-weight polyisoprene-butadiene copolymer, and hydrogenated products thereof; and the like. Among these, low-molecular-weigh hydrogenated polyisobutylene and low-molecular-weight hydrogenated polyisoprene are preferable since it is possible to obtain the modified hydrogenated block copolymer [E] that exhibits excellent flexibility (due to a softening effect) while maintaining transparency and light resistance. The low-molecular-weight hydrocarbon-based polymer is normally added in a ratio of 20 parts by weight or less, preferably 10 parts by weight or less, and more preferably 5 parts by weight or less, based on 100 parts by weight of the modified hydrogenated block copolymer [E]. An improvement in flexibility can be achieved by increasing the ratio of the low-molecular-weight hydrocarbon-based polymer. In this case, however, a decrease in heat resistance may occur, or the amount of eluted substance may increase.

The tackifier may be added in order to provide the modified hydrogenated block copolymer [E] with tackiness to improve adhesion to the metal foil. Examples of the tackifier include a rosin-based resin; a terpene-based resin; a coumarone-indene resin; a styrene-based resin; an aliphatic, alicyclic, or aromatic petroleum resin; hydrogenated products thereof; and the like. These tackifiers may be used either alone or in combination.

The tackifier is normally added in a ratio of 20 parts by weight or less, preferably 10 parts by weight or less, and more preferably 5 parts by weight or less, based on 100 parts by weight of the modified hydrogenated block copolymer [E]. An improvement in tackiness can be achieved by increasing the ratio of the tackifier. If the tackifier is used in too high a ratio, however, a decrease in heat resistance may occur, or the amount of eluted substance may increase.

The antioxidant, the UV absorber, the light stabilizer, the anti-blocking agent, and the like may be added to the modified hydrogenated block copolymer [E] in order to improve thermal stability, light resistance, workability, and the like. These additives may be used either alone or in combination. These additives are normally added in a ratio of 10 parts by weight or less, preferably 5 parts by weight or less, and more preferably 1 part by weight or less, based on 100 parts by weight of the modified hydrogenated block copolymer [E].

Examples of the antioxidant include a phosphorus-based antioxidant, a phenol-based antioxidant, a sulfur-based antioxidant, and the like.

Examples of the UV absorber include a benzophenone-based UV absorber, a salicylate-based UV absorber, a benzotriazole-based UV absorber, and the like.

A hindered amine-based light stabilizer is preferable as the light stabilizer. Examples of the hindered amine-based light stabilizer include a compound that includes a 3.5-di-t-butyl-4-hydroxyphenyl group in the structure, a compound that includes a 2,2,6,6-tetramethylpiperidyl group in the structure, a compound that includes a 1,2,2,6,6-pentamethyl-4-piperidyl group in the structure, and the like.

These additives may be used either alone or in combination. These additives are normally added in a ratio of 10 parts by weight or less, preferably 5 parts by weight or less, and more preferably 1 part by weight or less, based on 100 parts by weight of the modified hydrogenated block copolymer [E].

A resin composition that includes the modified hydrogenated block copolymer [E] and the desired additive may be prepared using a method that melts the modified hydrogenated block copolymer [E] using a twin-screw kneader, a roll, a Brabender, an extruder, or the like, adds the desired additive to the molten modified hydrogenated block copolymer [E], and kneads the mixture; a method that melts the hydrogenated block copolymer [D] using a twin-screw kneader, a roll, a Brabender, an extruder, or the like, kneads the molten hydrogenated block copolymer [D] together with either or both of the low-molecular-weight hydrocarbon-based polymer and the tackifier, reacts the hydrogenated block copolymer [D] with the ethylenically unsaturated silane compound in the presence of the peroxide to obtain the modified hydrogenated block copolymer [E], and adds the desired additive to the modified hydrogenated block copolymer [E]; a method that adds the desired additive when reacting the hydrogenated block copolymer [D] with the ethylenically unsaturated silane compound in the presence of the peroxide, and kneads the mixture; or the like.

### 5. Metal foil

The metal foil used in connection with one embodiment of the invention provides the composite multilayer sheet according to one embodiment of the invention with moisture-proofness and an oxygen barrier capability. It is desirable to use a metal foil that is free from defects (e.g., scratches and pinholes), and does not easily corrode even in a high temperature-high humidity environment.

Specific examples of the metal foil include an aluminum foil, a stainless steel foil, an iron foil, a copper foil, a tin foil, a gold foil, and the like. Among these, an aluminum foil and a stainless steel foil are preferable from the viewpoint of workability, weight, corrosion resistance, cost (economic efficiency), and the like.

The thickness of the metal foil is normally 5 to 50 µm, preferably 7 to 30 µm, and still more preferably 10 to 20 µm. If the thickness of the metal foil is too small, pinholes may occur (may be present). If the thickness of the metal foil is too large, it is considered that pinholes rarely occur, but the flexibility of the composite multilayer sheet may be impaired.

### 6. Composite multilayer sheet

The composite multilayer sheet according to one embodiment of the invention includes the sheet formed of the modified hydrogenated block copolymer [E] and the metal foil that are stacked in layers.

The composite multilayer sheet according to one embodiment of the invention has a layer configuration in which at least one sheet layer formed of the modified hydrogenated block copolymer [E] and at least one layer formed of the metal foil are stacked in layers. Since the sheet formed of the modified hydrogenated block copolymer [E] can be bonded to the metal foil by heating the sheet and the metal foil, it is unnecessary to provide an adhesive layer between the sheet formed of the modified hydrogenated block copolymer [E] and the metal foil. Therefore, it is possible to simplify the multilayer configuration, and it is very advantageous from the viewpoint of industrial production.

When a plurality of layers formed of the metal foil are provided, it is desirable that at least one layer formed of the modified hydrogenated block copolymer [E] be provided between the metal foils so that the metal foils do not come in direct contact with each other.

When the composite multilayer sheet according to one embodiment of the invention is used for an application in which the outermost layer is exposed to the external environment, it is preferable that the outermost layer be a sheet layer formed of the modified hydrogenated block copolymer [E], or a sheet layer formed of an additional resin. If a layer formed of the metal foil is used as the outermost layer of the composite multilayer sheet, an electrical short circuit may occur, or the metal foil may corrode when the composite multilayer sheet is used in an environment in which water is present. Moreover, it may be impossible to implement bonding through a heat stealing process or the like.

Examples of the additional resin include a polyester, a polyamide, a polyolefin, a polycarbonate, polyvinyl chloride, polyvinylidene chloride, a fluororesin, a polyurethane, a polyimide, and the like. Among these, a polyester and a polyamide are preferable from the viewpoint of mechanical strength and cost (economic efficiency).

The thickness of the layer formed of the additional resin is normally 10 to 200 µm, preferably 15 to 150 µm, and more preferably 20 to 100 µm. If the thickness of the layer formed of the additional resin is less than 10 µm, it may be difficult to sufficiently prevent penetration when a protrusion is externally pressed against the composite multilayer sheet according to one embodiment of the invention. If the thickness of the layer formed of the additional resin exceeds 200 µm, the flexibility of the composite multilayer sheet according to one embodiment of the invention may be impaired.

When the composite multilayer sheet according to one embodiment of the invention includes a sheet layer formed of the additional resin, it is desirable that the sheet layer formed of the additional resin be situated contiguous to a sheet layer formed of the modified hydrogenated block copolymer [E].

Examples of a preferable layer configuration of the composite multilayer sheet according to one embodiment of the invention include:
(a) a two-layer configuration consisting of a layer formed of the modified hydrogenated block copolymer [E] and a layer formed of the metal foil (layer formed of modified hydrogenated block copolymer [E] / layer formed of metal foil);
(b) a three-layer configuration consisting of a layer formed of the modified hydrogenated block copolymer [E], a layer formed of the metal foil, and a layer formed of the modified hydrogenated block copolymer [E] (layer formed of modified hydrogenated block copolymer [E] / layer formed of metal foil / layer formed of modified hydrogenated block copolymer [E]);
(c) a four-layer configuration consisting of a layer formed of the modified hydrogenated block copolymer [E], a layer formed of the metal foil, a layer formed of the modified hydrogenated block copolymer [E], and a layer formed of the additional resin (layer formed of modified hydrogenated block copolymer [E] / layer formed of metal foil / layer formed of modified hydrogenated block copolymer [E] / layer formed of additional resin);
(d) a five-layer configuration consisting of a layer formed of the additional resin,
   a layer formed of the modified hydrogenated block copolymer [E], a layer formed of the metal foil, a layer formed of the modified hydrogenated block copolymer [E], and
   a layer formed of the additional resin (layer formed of additional resin / layer formed of modified hydrogenated block copolymer [E] / layer formed of metal foil / layer formed of modified hydrogenated block copolymer [E] / layer formed of additional resin), or consisting of a layer formed of the modified hydrogenated block copolymer [E], a layer formed of the metal foil, a layer formed of the modified hydrogenated block copolymer [E], a layer formed of the metal foil, and a layer formed of the modified hydrogenated block copolymer [E] (layer formed of modified hydrogenated block copolymer [E] / layer formed of metal foil / layer formed of modified hydrogenated block copolymer [E] / layer formed of metal foil / layer formed of modified hydrogenated block copolymer [E]);
(e) a six-layer configuration consisting of a layer formed of the modified hydrogenated block copolymer [E], a layer formed of the metal foil, a layer formed of the modified hydrogenated block copolymer [E], a layer formed of the metal foil, a layer formed of the modified hydrogenated block copolymer [E], and a layer formed of the additional resin (layer formed of modified hydrogenated block copolymer [E] / layer formed of metal foil / layer formed of modified hydrogenated block copolymer [E] / layer formed of metal foil / layer formed of modified hydrogenated block copolymer [E] / layer formed of additional resin);
(f) a seven-layer configuration consisting of a layer formed of the additional resin, a layer formed of the modified hydrogenated block copolymer [E], a layer formed of the metal foil, a layer formed of the modified hydrogenated block copolymer [E], a layer formed of the metal foil, a layer formed of the modified hydrogenated block copolymer [E], and a layer formed of the additional resin (layer formed of additional resin / layer formed of modified hydrogenated block copolymer [E] / layer formed of metal foil / layer formed of modified hydrogenated block copolymer [E] / layer formed of metal foil / layer formed of modified hydrogenated block copolymer [E] / layer formed of additional resin); and the like.

When the composite multilayer sheet according to one embodiment of the invention includes a plurality of layers formed of the metal foil, excellent moisture-proofness and an excellent oxygen barrier capability can be easily obtained even when the layers formed of the metal foil have a small thickness. The composite multilayer sheet according to one embodiment of the invention may include one layer of modified hydrogenated block copolymer [E] or a plurality of layers respectively formed of two or more types of modified hydrogenated block copolymers [E] that differ from each other.

It is also desirable that one outermost layer or each outermost layer be formed of either or both of a polyester and a polyamide that exhibit excellent mechanical strength in order to improve the moisture-proofness and the oxygen barrier capability of the composite multilayer sheet, and prevent the occurrence of scratches or breakage due to external stress.

Specific examples of a preferable layer configuration include a four-layer configuration consisting of a layer formed of the modified hydrogenated block copolymer [E], a layer formed of an aluminum foil, a / layer formed of the modified hydrogenated block copolymer [E], and a layer formed of polyethylene terephthalate (layer formed of modified hydrogenated block copolymer [E] / layer formed of aluminum foil / layer formed of modified hydrogenated block copolymer [E] / layer formed of polyethylene terephthalate), or consisting of a layer formed of the modified hydrogenated block copolymer [E], a layer formed of an aluminum foil, a layer formed of the modified hydrogenated block copolymer [E], and a layer formed of nylon 66 (layer formed of modified hydrogenated block copolymer [E] / layer formed of aluminum foil / layer formed of modified hydrogenated block copolymer [E] / layer formed of nylon 66), a six-layer configuration consisting of a layer formed of the modified hydrogenated block copolymer [E], a layer formed of an aluminum foil, a layer formed of the modified hydrogenated block copolymer [E], a layer formed of an aluminum foil, a layer formed of the modified hydrogenated block copolymer [E], and a layer formed of nylon 66 (layer formed of modified hydrogenated block copolymer [E] / layer formed of aluminum foil / layer formed of modified hydrogenated block copolymer [E] / layer formed of aluminum foil / layer formed of modified hydrogenated block copolymer [E] / layer formed of nylon 66), and the like.

The thickness of the sheet formed of the modified hydrogenated block copolymer [E] is normally 10 to 400 µm, preferably 20 to 200 µm, and still more preferably 30 to 150 µm. If the thickness of the sheet formed of the modified hydrogenated block copolymer [E] is less than 10 µm, it may be difficult to sufficiently prevent a situation in which the metal foil breaks when a protrusion is externally pressed against the composite multilayer sheet. If the thickness of the sheet formed of the modified hydrogenated block copolymer [E] exceeds 400 µm, an increase in cost may occur (i.e., the economic efficiency may be impaired).

The composite multilayer sheet according to one embodiment of the invention may be produced using an arbitrary method. For example, the composite multilayer sheet according to one embodiment of the invention may be produced using a known forming method such as an extrusion lamination method or a dry lamination method.

The sheet formed of the modified hydrogenated block copolymer [E] may be produced using an arbitrary method. For example, the sheet formed of the modified hydrogenated block copolymer [E] may be produced using a known melt forming method such as an extrusion method, an inflation forming method, or a solution casting method. When producing the sheet formed of the modified hydrogenated block copolymer [E] using a melt forming method, the molten resin temperature is normally selected within the range from 180 to 230°C, preferably 185 to 220°C, and more preferably 190 to 210°C. If the resin temperature is too low, deterioration in fluidity may occur, and the resulting sheet may undergo significant shrinkage due to heating. If the resin temperature is too high, the resulting sheet may exhibit low adhesion to the metal foil and the additional resin.

When producing the composite multilayer sheet using an extrusion lamination method, a sheet formed of the modified hydrogenated block copolymer [E] may be extruded directly onto the metal foil at a temperature within the above range, and the resulting laminate may be compression-bonded using a roll. When producing the composite multilayer sheet using a dry lamination method, a laminate including a sheet formed of the modified hydrogenated block copolymer [E] produced using an extrusion method or the like, and the metal foil, may be thermocompression-bonded using a roll, a press, or the like.

A sheet formed of the additional resin may be stacked on the sheet layer formed of the modified hydrogenated block copolymer [E], or the layer formed of the metal foil, using a known forming method such as an extrusion lamination method or a dry lamination method, in the same manner as in the case of stacking the sheet formed of the modified hydrogenated block copolymer [E] on the metal foil.

When the outermost layer of the composite multilayer sheet according to one embodiment of the invention is a sheet layer formed of the modified hydrogenated block copolymer [E], the composite multilayer sheet according to one embodiment of the invention can be bonded to a metal, glass, a resin formed article, and the like with heating, and two composite multilayer sheets according to one embodiment of the invention can also be bonded to each other with heating. A bag can be formed by heat-sealing a plurality of composite multilayer sheets along the edge (side), or heat-sealing two composite multilayer sheets along the edge (side).

The composite multilayer sheet according to the embodiments of the invention may be used as (or for) a drug packing material, a PTP packing material, a food/drink packing materials, a frozen food packing material, a back-side protective sheet for a solar cell module, an organic EL device sealing material, a conductive sheet, a heat sink sheet, an electronic part packing material, a coating material/paint packing material, a liquid adhesive packing material, a cold container, a cold container exterior material, an insulation sheet, a thermal barrier sheet, a heat-insulating sheet, a vacuum thermal insulation exterior material, a shading sheet, a light-reflecting sheet, an electromagnetic wave shield, a window shade, a roof waterproofing sheet, a safety cover, a helmet, an automobile/motorcycle/bicycle part, a rearview mirror, a flexible printed wiring board, a wire covering material, a mobile phone/smartphone interior/exterior material, and the like.

### EXAMPLES

The invention is further described below by way of examples. Note that the invention is not limited to the following examples. The units "parts" and "%" respectively refer to "parts by weight" and "wt%" unless otherwise indicated.

The measurement methods and the evaluation methods used in connection with the examples are described below.

### (1) Weight average molecular weight (Mw) and molecular weight distribution (Mw/Mn)

The molecular weight of the block copolymer and the hydrogenated block copolymer was determined by GPC (temperature: 38°C, eluent: THF) as a standard polystyrene-equivalent value. The molecular weight was measured using a GPC system "HLC-8020 GPC" manufactured by Tosoh Corporation.

### (2) Hydrogenation rate

The hydrogenation rate of the main chain, the side chain, and the aromatic ring of the hydrogenated block copolymer [D] was calculated from the ¹H-NMR spectrum.

### (3) Adhesion of sheet formed of modified hydrogenated block copolymer [E] or hydrogenated block copolymer [D] to metal foil

A sheet formed of the modified hydrogenated block copolymer [E] or the hydrogenated block copolymer [D] was placed on the metal foil so that a non-bonding area was provided at the end of the sheet. The laminate was pressed (bonded) at a temperature of 170°C for 10 minutes under a pressure of 0.1 MPa using a vacuum laminator to prepare a peel strength measurement specimen.

The specimen was cut to have a width of 15 mm and a length of 200 mm, and subjected to a 180° peel test at a peel rate of 100 mm/min (from the non-bonding area of the sheet) in accordance with JIS K 6854-2 using an autograph ("AGS-10KNX" manufactured by Shimadzu Corporation) to measure the peel strength.

The initial peel strength of the specimen, and the peel strength of the specimen that had been stored in a high temperature-high humidity environment (85°C, 85%RH) for 288 hours, were measured and evaluated. The adhesion was evaluated as "Good" when the peel strength was 5 N/cm or more, and evaluated as "Bad" when the peel strength was less than 5 N/cm.

### (4) Water vapor transmission rate of composite multilayer sheet

The water vapor transmission rate of the composite multilayer sheet (specimen) was measured in accordance with JIS K 7129 (method A) at a temperature of 40°C and a relative humidity of 90% (90%RH) using a water vapor transmission rate tester ("L80-5000" manufactured by LYSSY). The moisture-proofness of the composite multilayer sheet was evaluated as "Good" when the water vapor transmission rate was 0.1 g/m²·day or less, and evaluated as "Bad" when the water vapor transmission rate exceeded 0.1 g/m²·day.

### (5) Oxygen transmission rate of composite multilayer sheet

The oxygen transmission rate of the composite multilayer sheet (specimen) was measured in accordance with JIS K 7126 (method B) at a temperature of 23°C and a relative humidity of 50% (50%RH) using an oxygen transmission rate tester ("OPT-5000" manufactured by LYSSY). The oxygen barrier capability of the composite multilayer sheet was evaluated as "Good" when the oxygen transmission rate was 1 cc/m²·day·atm or less, and evaluated as "Bad" when the oxygen transmission rate exceeded 1 cc/m²·day·atm.

### (6) Steam sterilization resistance of composite multilayer sheet

The composite multilayer sheet (specimen) was put in a high-pressure steam sterilization device ("SX-700" manufactured by Tomy Seiko Co., Ltd.), and subjected to steam sterilization at 121°C for 30 minutes under a pressure of 2 atmospheres. After cooling the composite multilayer sheet to room temperature (25°C), the composite multilayer sheet was removed from the high-pressure steam sterilization device, and the external appearance of the composite multilayer sheet was observed with the naked eye to determine the presence or absence of abnormalities (e.g., deformation of the composite multilayer sheet, or separation from the metal foil). A case where no abnormalities were observed was evaluated as "Good", and a case where abnormalities were observed was evaluated as "Bad".

### (7) Durability of solar cell in which composite multilayer sheet was used as a back-side protective layer

A sealing material (thickness: 600 µm) formed of an ethylene-vinyl acetate copolymer was placed on white sheet glass (thickness: 3.2 mm, length: 200 mm, width: 200 mm), and a polycrystalline silicon solar cell (155 mm×155 mm×200 µm (thickness), manufactured by Advantec Co., Ltd.) (to which a tab wire was connected on each side) was placed thereon. A sealing material (thickness: 600 µm) formed of an ethylene-vinyl acetate copolymer, and the composite multilayer sheet (back-side protective layer) were sequentially placed on the solar cell to obtain a laminate. The laminate was deaerated at 150°C for 5 minutes using a vacuum laminator, pressed (sealed) for 20 minutes, and heated at 150°C for 30 minutes in an oven to obtain a solar cell module.

The solar cell module was stored in a high temperature-high humidity environment (temperature: 85°C, relative humidity: 85% (85%RH)) for 2,000 hours. After removing the solar cell module from the high temperature-high humidity environment, the I-V characteristics of the solar cell module were measured using a solar simulator ("PVS1116i" manufactures by Nisshinbo Mechatronics Inc.), and the maximum output (Pm) was evaluated. A case where the retention ratio (Pm/Pm₀) of the maximum output (Pm) after the test to the initial maximum output (Pm₀) was 98% or more was evaluated as "Good", and a case where the retention ratio (Pm/Pm₀) was less than 98% was evaluated as "Bad".

### Reference Example 1: Production of modified hydrogenated block copolymer [E1] Production of block copolymer [C1]

A reactor equipped with a stirrer in which the internal atmosphere had been sufficiently replaced with nitrogen, was charged with 550 parts of dehydrated cyclohexane, 25.0 parts of dehydrated styrene, and 0.475 parts of n-dibutyl ether. 0.60 parts of a 15% solution of n-butyllithium in cyclohexane was added to the mixture at 60°C with stirring to initiate polymerization. The mixture was reacted at 60°C for 60 minutes with stirring. The polymerization conversion rate measured by gas chromatography was 99.5%.

After the addition of 50.0 parts of dehydrated isoprene, the resulting mixture was stirred for 30 minutes. The polymerization conversion rate was 99.5%.

After the addition of 25.0 parts of dehydrated styrene, the resulting mixture was stirred at 60°C for 60 minutes. The polymerization conversion rate was about 100%.

0.5 parts of isopropyl alcohol was added to the reaction mixture to terminate the reaction. The resulting block copolymer [C1] had a weight average molecular weight (Mw) of 69,200 and a molecular weight distribution (Mw/Mn) of 1.05, and the ratio "wA:wB" was 50:50.

### Production of hydrogenated block copolymer [D1]

The polymer solution obtained as described above was transferred to a pressure-resistant reactor equipped with a stirrer. After the addition of 8.0 parts of a nickel catalyst supported on diatomaceous earth ("E22U" manufactured by JGC Catalysts and Chemicals Ltd., nickel content (amount of nickel supported): 60%) (hydrogenation catalyst) and 100 parts of dehydrated cyclohexane, the mixture was mixed. After replacing the atmosphere inside the reactor with hydrogen gas, hydrogen was supplied to the reactor while stirring the solution to effect a hydrogenation reaction at 190°C for 6 hours under a pressure of 4.5 MPa. The resulting hydrogenated block copolymer [D1] had a weight average molecular weight (Mw) of 73,300 and a molecular weight distribution (Mw/Mn) of 1.06.

After filtering the reaction solution to remove the hydrogenation catalyst, 1.0 parts of a solution prepared by dissolving 0.1 parts of pentaerythrityl tetrakis[3-(3,5-di-t-butyl-4-hydroxyphenyl)propionate] ("Songnox 1010" manufactured by KOYO Chemical Research Center) (phenol-based antioxidant) in xylene was added to the reaction solution, and dissolved therein.

After filtering the resulting solution through a metal fiber filter (manufactured by Nichidai Corporation, pore size: 0.4 µm) to remove fine solids, the solvent (cyclohexane and xylene) and other volatile components were removed from the solution at 260°C under a pressure of 0.001 MPa or less using a cylindrical evaporator ("Kontro" manufactured by Hitachi Ltd.). The molten polymer was filtered at 260°C using a polymer filter (manufactured by Fuji Filter Mfg. Co., Ltd.) provided with a stainless steel sintered filter (pore size: 5 µm) connected to the evaporator, extruded from a die in the shape of a strand, cooled, and cut using a pelletizer to obtain 96 parts of pellets of the hydrogenated block copolymer [D1].

The pellets of the hydrogenated block copolymer [D1] had a weight average molecular weight (Mw) of 72,500 and a molecular weight distribution (Mw/Mn) of 1.11, and the hydrogenation rate was about 100%.

### Production of modified hydrogenated block copolymer [E1]

2.0 parts of vinyltrimethoxysilane and 0.2 parts of 2,5-dimethyl-2,5-di(t-butylperoxy)hexane ("PERHEXA (registered trademark) 25B" manufactured by NOF Corporation) were added to 100 parts of the pellets of the hydrogenated block copolymer [D1]. The mixture was kneaded at a resin temperature of 200°C for a residence time of 60 to 70 seconds using a twin-screw extruder, and extruded in the shape of a strand. The extruded product was air-cooled, and cut using a pelletizer to obtain 95 parts of pellets of an alkoxysilyl group-containing modified hydrogenated block copolymer [E1].

After dissolving 10 parts of the pellets of the modified hydrogenated block copolymer [E1] in 100 parts of cyclohexane, the solution was poured into 400 parts of dehydrated methanol to coagulate the modified hydrogenated block copolymer [E1], which was filtered off, and dried at 25°C under vacuum to isolate 9.0 parts of crumbs of the modified hydrogenated block copolymer [E1]. The FT-IR spectrum of the modified hydrogenated block copolymer [E1] was measured. An absorption peak attributed to an Si-OCH₃ group was observed at 1,090 cm⁻¹, and an absorption peak attributed to an Si-CH₂ group was observed at 825 cm⁻¹ and 739 cm⁻¹. These absorption peaks were observed at positions that differ from those (1,075 cm⁻¹, 808 cm⁻¹, 766 cm⁻¹) of vinyltrimethoxysilane. An absorption band based on the proton of a methoxy group was observed at 3.6 ppm in the ¹H-NMR spectrum (in deuterated chloroform). It was confirmed from the peak area ratio that 1.8 parts of vinyltrimethoxysilane was bonded to 100 parts of the hydrogenated block copolymer [D1].

### Production of sheet formed of modified hydrogenated block copolymer [E1]

The pellets of the modified hydrogenated block copolymer [E1] were extruded using a T-die film melt extrusion device (width of T-die: 300 mm) (provided with an extruder having a screw with a diameter of 25 mm), and an extruded sheet-forming device provided with a casting roll and a sheet take-up device (molten resin temperature: 210°C, T-die temperature: 210°C, casting roll temperature: 80°C) to obtain a sheet (thickness; 50, 150, or 380 µm, width: 230 mm) formed of the modified hydrogenated block copolymer [E1]. The resulting sheet was wound around a roll.

### Reference Example 2: Production of a sealing material including ethylene-vinyl acetate copolymer as main component

5 parts by weight of triallyl isocyanurate, 0.5 parts by weight of 3-methacryloxypropyltrimethoxysilane ("KBM-503" manufactured by Shin-Etsu Chemical Co., Ltd.), 1.0 parts by weight of dicumyl peroxide ("PERCUMYL (registered trademark) D" manufactured by NOF Corporation), and 0.4 parts by weight of 2-(2H-benzotriazol-2-yl)-4-(1,1,3,3-tetramethylbutyl)phenol were added to 95 parts by weight of pellets of an ethylene-vinyl acetate copolymer ("Evaflex (registered trademark) EV150" manufactured by DuPont-Mitsui Polychemicals Co., Ltd., vinyl acetate content: 33 wt%) to prepare a mixture. The mixture was extruded using a T-die film-forming device (width of T-die: 300 mm) provided with a twin-screw extruder ("TEM37B" manufactured by Toshiba Machine Co., Ltd.) and a film take-up device provided with an embossing roll (molten resin temperature: 90°C, T-die temperature: 90°C, embossing roll temperature: 40°C) while pressing one side of the extruded sheet against the embossing roll using a touch roll to obtain a sealing material hereinafter referred to as "EVA sealing material") sheet having a thickness of 600 µm and a width of 230 mm and including the ethylene-vinyl acetate copolymer as the main component.

### Example 1: Production of composite multilayer sheet [S1]

The sheet (thickness: 380 µm) formed of the modified hydrogenated block copolymer [E1] obtained in Reference Example 1 and an aluminum foil (thickness: 30 µm, material (JIS H 4160 alloy No. (hereinafter the same)): 1N30, manufactured by Mitsubishi Aluminum Co., Ltd.) were bonded to each other using a vacuum laminator to obtain a peel strength measurement composite multilayer (two-layer) sheet [S1]. The initial peel strength of the composite multilayer sheet [S1], and the peel strength of the composite multilayer sheet [S1] that had been stored in a high temperature-high humidity environment, were evaluated. The initial peel strength of the composite multilayer sheet [S1] was 8 N/cm, and the peel strength of the composite multilayer sheet [S1] that had been stored in a high temperature-high humidity environment was 15 N/cm or more. It was thus confirmed that a decrease in adhesion did not occur even in a high temperature-high humidity environment. The results are shown in Table 1.

### Example 2: Production of composite multilayer sheet [S2]

The sheet (thickness: 50 µm) formed of the modified hydrogenated block copolymer [E1] obtained in Reference Example 1, an aluminum foil (thickness: 12 µm, material: 1N30, manufactured by Mitsubishi Aluminum Co., Ltd.), and a nylon film ("Rayfan (registered trademark) NO" manufactured by Toray Advanced Film Co., Ltd., thickness: 30 µm) were stacked (sheet formed of modified hydrogenated block copolymer [E1] / aluminum foil / sheet formed of modified hydrogenated block copolymer [E1] / aluminum foil / sheet formed of modified hydrogenated block copolymer [E1] / nylon film) to obtain a laminate. The laminate was deaerated at 170°C for 5 minutes under reduced pressure using a vacuum laminator, and pressed (bonded) at 170°C for 10 minutes under a pressure of 0.1 MPa to obtain a composite multilayer (six-layer) sheet [S2].

### Water vapor transmission rate

The water vapor transmission rate of the composite multilayer sheet [S2] was 0.01 g/m²·24 h or less (i.e., the composite multilayer sheet [S2] exhibited an excellent water vapor barrier capability).

### Oxygen transmission rate

The oxygen transmission rate of the composite multilayer sheet [S2] was 0.1 ml/m²·24 h·MPa or less (i.e., the composite multilayer sheet [S2] exhibited an excellent oxygen barrier capability).

### Steam sterilization resistance

The composite multilayer sheet [S2] was subjected to high-pressure steam sterilization at 121°C and 30 minutes, and the external appearance of the composite multilayer sheet [S2] was observed. No abnormalities (e.g., deformation and separation) were found (i.e., the composite multilayer sheet [S2] exhibited excellent steam sterilization resistance).

### Durability of solar cell

A solar cell module was produced using the EVA sealing material sheet obtained in Reference Example 2 and the composite multilayer sheet [S2] as the back-side protective sheet. The initial maximum output (Pm₀) of the solar cell module, and the maximum output (Pm) of the solar cell module that had been stored in a high temperature-high humidity environment, were measured. The output retention ratio was calculated to be 100.1% (i.e., the solar cell module exhibited excellent durability).

The evaluation results are shown in Table 2.

### Example 3

The sheet (thickness: 380 µm) formed of the modified hydrogenated block copolymer [E1] obtained in Reference Example 1 and a stainless steel foil (thickness: 50 µm, material: SUS304) were bonded to each other using a vacuum laminator to obtain a peel strength measurement composite multilayer (two-layer) sheet [S3]. The initial peel strength of the composite multilayer sheet [S3], and the peel strength of the composite multilayer sheet [S3] that had been stored in a high temperature-high humidity environment, were evaluated. The results are shown in Table 1.

### Reference Example 3: Production of modified hydrogenated block copolymer [E2] Production of block copolymer [C2]

A polymerization reaction was effected and terminated in the same manner as in Reference Example 1, except that 20.0 parts of styrene, 60.0 parts of isoprene, and 20.0 parts of styrene were sequentially added, and the 15% solution of n-butyllithium in cyclohexane was used in a ratio of 0.59 parts. The resulting block copolymer [C2] had a weight average molecular weight (Mw) of 70,100 and a molecular weight distribution (Mw/Mn) of 1.07, and the ratio "wA:wB" was 40:60.

### Production of hydrogenated block copolymer [D2]

The polymer solution obtained as described above was subjected to a hydrogenation reaction in the same manner as in Reference Example 1. The resulting hydrogenated block copolymer [D2] had a weight average molecular weight (Mw) of 74,200 and a molecular weight distribution (Mw/Mn) of 1.08.

After completion of the hydrogenation reaction, an antioxidant was added to the reaction solution in the same manner as in Reference Example 1, followed by concentration and drying to obtain 94 parts of pellets of the hydrogenated block copolymer [D2]. The pellets of the hydrogenated block copolymer [D2] had a weight average molecular weight (Mw) of 73,400 and a molecular weight distribution (Mw/Mn) of 1.13, and the hydrogenation rate was about 100%.

### Production of modified hydrogenated block copolymer [E2]

93 parts of pellets of a modified hydrogenated block copolymer [E2] were obtained in the same manner as in Reference Example 1, except that 100 parts of the pellets of the hydrogenated block copolymer [D2] were used.

The modified hydrogenated block copolymer [E2] was analyzed in the same manner as in Reference Example 1. It was found that 1.8 parts of vinyltrimethoxysilane was bonded to 100 parts of the hydrogenated block copolymer [D2].

### Production of sheet formed of modified hydrogenated block copolymer [E1]

A sheet (thickness: 50, 150, or 380 µm, width: 230 mm) formed of the modified hydrogenated block copolymer [E2] was produced in the same manner as in Reference Example 1, except that the pellets of the modified hydrogenated block copolymer [E2] were used, the molten resin temperature was set to 200°C., the T-die temperature was set to 200°C, and the casting roll temperature was set to 60°C. The resulting sheet was wound around a roll.

### Example 4

The sheet (thickness: 380 µm) formed of the modified hydrogenated block copolymer [E2] obtained in Reference Example 3 and an aluminum foil (thickness: 30 µm) were bonded to each other using a vacuum laminator to obtain a peel strength measurement composite multilayer (two-layer) sheet [S4]. The initial peel strength of the composite multilayer sheet [S4], and the peel strength of the composite multilayer sheet [S4] that had been stored in a high temperature-high humidity environment, were evaluated. The results are shown in Table 1.

### Example 5: Production of composite multilayer sheet [S5]

A composite multilayer (four-layer) sheet [S5] was produced in the same manner as in Example 2, except that the sheet (thickness: 50 or 150 µm) formed of the modified hydrogenated block copolymer [E2] obtained in Reference Example 3 was used instead of the sheet formed of the modified hydrogenated block copolymer [E1], an aluminum foil (thickness: 30 µm, material: 1N30, manufactured by Mitsubishi Aluminum Co., Ltd.) was used as the aluminum foil, and the materials were stacked so as to have the layer configuration "sheet (thickness: 150 µm) formed of modified hydrogenated block copolymer [E2] / aluminum foil / sheet (thickness: 50 µm) formed of modified hydrogenated block copolymer [E2] / nylon film".

The water vapor transmission rate, the oxygen transmission rate, and the steam sterilization resistance were evaluated using the resulting composite multilayer sheet [S5]. The results are shown in Table 2.

A solar cell module was produced in the same manner as in Example 2, except that the composite multilayer sheet [S5] was used. The durability of the solar cell module when the solar cell module was stored in a high temperature-high humidity environment was evaluated. The results are shown in Table 2.

### Comparative Example 1: Production of sheet formed of hydrogenated block copolymer [D1]

A sheet (thickness: 50, 150, or 380 µm, width: 230 mm) formed of the hydrogenated block copolymer [D1] was produced in the same manner as in Reference Example 1, except that the hydrogenated block copolymer [D1] was used instead of the modified hydrogenated block copolymer [E1].

The sheet (thickness: 380 µm) formed of the hydrogenated block copolymer [D1] and an aluminum foil (thickness: 30 µm) were bonded to each other using a vacuum laminator to obtain a peel strength measurement composite multilayer (two-layer) sheet [S6]. The initial peel strength of the composite multilayer sheet [S6], and the peel strength of the composite multilayer sheet [S6] that had been stored in a high temperature-high humidity environment, were evaluated. The results are shown in Table 1.

### Comparative Example 2: Production of sheet formed of hydrogenated block copolymer [D2]

A sheet (thickness: 50, 150, or 380 µm, width: 230 mm) formed of the hydrogenated block copolymer [D2] was produced in the same manner as in Reference Example 1, except that the hydrogenated block copolymer [D2] was used instead of the modified hydrogenated block copolymer [E1].

The sheet (thickness: 380 µm) formed of the hydrogenated block copolymer [D2] and an aluminum foil (thickness: 30 µm) were bonded to each other using a vacuum laminator to obtain a peel strength measurement composite multilayer (two-layer) sheet [S7]. The initial peel strength of the composite multilayer sheet [S7], and the peel strength of the composite multilayer sheet [S7] that had been stored in a high temperature-high humidity environment, were evaluated. The results are shown in Table 1.

### Comparative Example 3: Production of composite multilayer sheet [S8]

A composite multilayer (three-layer) sheet [S8] was produced in the same manner as in Example 2, except that the sheet (thickness: 150 µm) formed of the modified hydrogenated block copolymer [E1] obtained in Reference Example 1 was used, an aluminum foil was not used, and the materials were stacked so as to have the layer configuration "sheet (thickness: 150 µm) formed of modified hydrogenated block copolymer [E1] / sheet (thickness: 150 µm) formed of modified hydrogenated block copolymer [E1] / nylon film".

The water vapor transmission rate, the oxygen transmission rate, and the steam sterilization resistance were evaluated using the resulting composite multilayer sheet [S8]. The results are shown in Table 2.

A solar cell module was produced in the same manner as in Example 2, except that the composite multilayer sheet [S8] was used. The durability of the solar cell module when the solar cell module was stored in a high temperature-high humidity environment was evaluated. The results are shown in Table 2.

### Example 6: Production of composite multilayer sheet [S9]

The sheet (thickness: 50 µm) formed of the modified hydrogenated block copolymer [E1] obtained in Reference Example 1 and an aluminum foil (thickness: 12 µm, material: 1N30, manufactured by Mitsubishi Aluminum Co., Ltd.) were stacked (sheet formed of modified hydrogenated block copolymer [E1] / aluminum foil / sheet formed of modified hydrogenated block copolymer [El]) to obtain a laminate. The laminate was deaerated at 170°C for 5 minutes under reduced pressure using a vacuum laminator, and pressed (bonded) at 170°C for 10 minutes under a pressure of 0.1 MPa to obtain a composite multilayer (three-layer) sheet [S9].

### Storage stability of chemicals

Two sheets having a length of 100 mm and a width of 100 mm were cut from the composite multilayer sheet [S9], placed opposite to each other, and heat-sealed along three sides to obtain a bag-shaped container. 20 g of calcium chloride (food additive grade, particulate, manufactured by Wako Pure Chemical Industries, Ltd.) was put in the bag-shaped container, and the bag-shaped container heat-sealed along the open side. The bag-shaped container (formed of the composite multilayer sheet [S9]) containing calcium chloride in a sealed state was put in a thermo-hygrostat, and stored for 1000 hours at a temperature of 40°C and a relative humidity of 90% (90%RH). An increase in the total weight of the bag-shaped container with respect to the initial total weight due to storage (1000 hours) was 0.02 g or less. The bag-shaped container was then opened, and calcium chloride was removed from the bag-shaped container, and observed. No change in properties was found. It was thus confirmed that the container formed of the composite multilayer sheet was useful as a chemical storage container.

**TABLE 1**

| | | | | Example 1 | Example 3 | Example 4 | Comparative Example 1 | Comparative Example 2 |
|---|---|---|---|---|---|---|---|---|
| Composite multilayer sheet | | | | [S1] | [S3] | [S4] | [S6] | [S7] |
| | First layer | | Material | [E1]¹⁾ | [E1]¹⁾ | [E2]²⁾ | [D1]³⁾ | [D2]⁴⁾ |
| | | | Thickness (µm) | 380 | 380 | 380 | 380 | 380 |
| | Second layer | | Material | Aluminum foil | Stainless steel foil | Aluminum foil | Aluminum foil | Aluminum foil |
| | | | Thickness (µm) | 30 | 50 | 30 | 30 | 30 |
| | | | | | | | | |
| | | | Unit | | | | | |
| Adhesion | Peel strength | Initial value | N/cm | 8 | 14 | 10 | <1 | <1 |
| | | After storage in high temperature-high humidity environment | N/cm | >15 | >15 | >15 | <1 | <1 |

| | | | | | | | | |
|---|---|---|---|---|---|---|---|---|
| ¹⁾ [E1]: Sheet formed of modified hydrogenated block copolymer [E1] ²⁾ [E2]: Sheet formed of modified hydrogenated block copolymer [E2] ³⁾ [D1]: Sheet formed of hydrogenated block copolymer [D1] ⁴⁾ [D2]: Sheet formed of hydrogenated block copolymer [D2] | | | | | | | | |

**TABLE 2**

| | | | | Example 2 | | Example 5 | | Comparative Example 3 | |
|---|---|---|---|---|---|---|---|---|---|
| | | | | [S2] | | [S5] | | [S8] | |
| Composite multilayer sheet | First layer | Material | Thickness (µm) | [E1]¹⁾ | 150 | [E2]²⁾ | 150 | [E1]¹⁾ | 150 |
| | Second layer | Material | Thickness (µm) | Aluminum foil | 12 | Aluminum foil | 30 | [E1]¹⁾ | 150 |
| | Third layer | Material | Thickness (µm) | [E1]¹⁾ | 50 | [E2]²⁾ | 50 | Nylon | 30 |
| | Fourth layer | Material | Thickness (µm) | Aluminum foil | 12 | Nylon | 30 | - | |
| | Fifth layer | Material | Thickness (µm) | [E1]¹⁾ | 50 | - | | - | |
| | Sixth layer | Material | Thickness (µm) | Nylon | 30 | - | | - | |
| | | | | | | | | | |
| | | Unit | | | | | | | |
| Water vapor transmission rate | | g/m²·24 h | | <0.01 | | <0.01 | | 0.35 | |
| Oxygen transmission rate | | cc/m²·24 h·atm | | <0.1 | | <0.1 | | 15 | |
| Steam sterilization resistance | | - | | Good | | Good | | Good | |
| Durability of solar cell | | - | | Good | | Good | | Bad | |

| | | | | | | | | | |
|---|---|---|---|---|---|---|---|---|---|
| ¹⁾ [E1]: Modified hydrogenated block copolymer [E1] ²⁾ [E2]: Modified hydrogenated block copolymer [E2] | | | | | | | | | |

The following were confirmed from the results shown in Tables 1 and 2.

The composite multilayer sheets according to the embodiments of the invention obtained by stacking the sheet formed of the modified hydrogenated block copolymer [E] (into which an alkoxysilyl group was introduced) and the metal foil, exhibited sufficient interlayer adhesion (Examples 1, 3, and 4).

The sheets formed of the hydrogenated block copolymer [D] into which an alkoxysilyl group was not introduced, exhibited poor adhesion to the metal foil (Comparative Examples 1 and 2).

The composite multilayer sheets according to the embodiments of the invention had a low water vapor transmission rate and a low oxygen transmission rate (exhibited excellent moisture-proofness and an excellent oxygen barrier capability), exhibited high heat resistance, did not undergo interlayer separation even in a high temperature-high humidity environment, exhibited excellent hydrolysis resistance, and could be sterilized by steam sterilization (Examples 2 and 5).

When the composite multilayer sheets according to the embodiments of the invention were used as the back-side protective sheet of the solar cell module, the solar cell module exhibited excellent durability in a high temperature-high humidity environment (Examples 2 and 5).

When the sheet formed of the modified hydrogenated block copolymer [E] into which an alkoxysilyl group was introduced, was used, the multilayer sheet exhibited insufficient moisture-proofness and an insufficient oxygen barrier capability when the multilayer sheet did not include a metal foil. When this composite multilayer sheet was used as the back-side protective sheet of the solar cell module, the maximum output decreased when the solar cell module was exposed to a high temperature-high humidity environment (i.e., the solar cell module exhibited poor durability) (Comparative Example 3).

The container formed of the composite multilayer sheet according to the embodiments of the invention was useful as a chemical storage container that exhibits high hygroscopicity (Example 6).

### INDUSTRIAL APPLICABILITY

The composite multilayer sheet according to the embodiments of the invention exhibits excellent moisture-proofness, oxygen barrier capability, light-blocking capability, heat resistance, hydrolysis resistance, and the like, and is suitable as a drug/food packing material, a solar cell module back-side protective sheet, an organic EL device sealing material, an electronic part packing material, and the like.

## Claims

1. A composite multilayer sheet comprising a sheet and a metal foil that are stacked in layers, the sheet being formed of a modified hydrogenated block copolymer [E], the modified hydrogenated block copolymer [E] being obtained by introducing an alkoxysilyl group into a hydrogenated block copolymer [D], the hydrogenated block copolymer [D] being obtained by hydrogenating 90% or more of all unsaturated bonds of a block copolymer [C] that comprises at least two polymer blocks [A] and at least one polymer block [B], the polymer block [A] comprising a repeating unit derived from an aromatic vinyl compound as a main component, the polymer block [B] comprising a repeating unit derived from a linear conjugated diene compound as a main component, and a ratio (wA:wB) of a total weight fraction wA of the polymer block [A] in the block copolymer [C] to a total weight fraction wB of the polymer block [B] in the block copolymer [C] being 30:70 to 70:30.

2. The composite multilayer sheet according to claim 1, wherein the metal foil is an aluminum foil.

3. The composite multilayer sheet according to claim 1, wherein a plurality of the sheets formed of the modified hydrogenated block copolymer [E] and a plurality of the metal foils are stacked in layers.

4. The composite multilayer sheet according to claim 1, further comprising a sheet formed of either or both of a polyester and a polyamide.

5. The composite multilayer sheet according to claim 4, wherein at least one of outermost layers of the composite multilayer sheet is a sheet layer formed of either or both of the polyester and the polyamide, and a sheet layer formed of the modified hydrogenated block copolymer [E] is contiguous to the sheet layer formed of either or both of the polyester and the polyamide.
